# EUROPEAN PATENT APPLICATION

(11) **EP 3 226 428 A1**
(43) Date of publication of application: **04.10.2017**
(21) Application number: 15862164.9
(22) Date of filing: 30.09.2015
(51) Int. Cl.: H04B 3/54, H04L 1/00, H04J 11/00, H04L 27/26

(54) **COMMUNICATION DEVICE AND COMMUNICATION METHOD**

(30) Priority: 24.11.2014 US 201462083810 P
(71) Applicant: Panasonic Intellectual Property Management Co., Ltd., Osaka-shi, Osaka 540-6207 (JP)
(72) Inventor: KOGA, Hisao, Osaka-shi Osaka 540-6207 (JP); NOSAKA, Shigekiyo, Osaka-shi Osaka 540-6207 (JP); IKEDA, Koji, Osaka-shi Osaka 540-6207 (JP)
(74) Representative: Eisenführ Speiser
(86) International application number: PCT/JP2015/004993
(87) International publication number: WO 2016/084297

(57) **Abstract**

A communication apparatus capable of preventing communication performance from deteriorating is provided even when the state of a transmission line is defective in the entire bandwidth. A communication apparatus that performs a communication with another communication apparatus using a frequency bandwidth including a plurality of communication channels and includes a processor and a communicating device. The communicating device transmits a signal to the another communication apparatus using a first number of communication channels included in the frequency bandwidth, and receives a response to the signal from the another communication apparatus using the first number of communication channels. The processor changes the number of communication channels used in the communication with the another communication apparatus, from the first number to a second number, in accordance with the response to the signal, and controls power for each of the communication channels used in the communication with the another communication apparatus based on the second number.

## Description

### Technical Field

The present disclosure relates to a communication apparatus and a communication method.

### Background Art

Hitherto, a wireless communication apparatus has been known which includes a transmission unit and a receiving unit, and transmits communication data from the transmission unit to the receiving unit. In this wireless communication apparatus, when the transmission unit sends a reference packet and a data packet, and the receiving unit receives neither the reference packet nor the data packet, a frequency channel for reception is changed (see, for example, Patent Literature 1). Thereby, a channel is transitioned from a frequency channel in which a communication error due to noise or interference is generated to another frequency channel.

### Citation List

### Patent Literature

[Patent Literature 1] JP-A-2014-110585

### Summary of Invention

### Technical Problem

In a technique disclosed in JP-A-2014-110585, communication performance deteriorates when the state of a transmission path between the transmission unit and the receiving unit is defective in the entire bandwidth.

The present disclosure is contrived in view of such circumstances, and an object thereof of the present disclosure is to provide a communication apparatus and a communication method which are capable of preventing communication performance from deteriorating even when the state of a transmission path is defective in the entire bandwidth.

### Solution to Problem

A communication apparatus of the present disclosure performs a communication with another communication apparatus using a frequency bandwidth including a plurality of communication channels. The communication apparatus includes a processor and a communicating device. The communicating device transmits a signal to the another communication apparatus using a first number of communication channels included in the frequency bandwidth, and receives a response to the signal from the another communication apparatus using the first number of communication channels. The processor changes the number of communication channels used in communication with the another communication apparatus, from the first number to a second number, in accordance with the response to the signal, and controls power for each of the communication channels used in the communication with the another communication apparatus based on the second number.

### Advantageous Effects of Invention

According to the present disclosure, it is possible to prevent communication performance from deteriorating even when the state of a transmission path is defective in the entire bandwidth.

### Brief description of Drawings

Fig. 1 is a block diagram illustrating a configuration example of a communication system in a first embodiment.
Fig. 2 is a schematic diagram illustrating a hardware configuration example of a PLC apparatus.
Fig. 3 is a schematic diagram illustrating an example of communication frequencies and communication channels which are used by the PLC apparatus.
Fig. 4 is a schematic diagram illustrating an example of a communication frame.
Fig. 5 is a schematic diagram illustrating an example of a relationship between power and the number of communication channels which are used in communication in each DPC mode.
Fig. 6 is a schematic diagram illustrating an example of a relationship between each DPC mode and power.
Fig. 7 is a schematic diagram illustrating a round robin in each DPC mode.
Fig. 8 is a flow diagram illustrating an operation example when a DPC mode is changed in order to increase power.
Fig. 9 is a flow diagram illustrating an operation example when a DPC mode is changed in order to reduce power.

### Description of Embodiments

Hereinafter, embodiments will be described in detail with reference to the accompanying drawings as appropriately. However, more detailed description than necessary may not be given. For example, detailed description of already well-known matters or redundant description of substantially the same components as those previously stated will not be given. This is intended to prevent the following description from being unnecessarily lengthy and to facilitate understanding by those skilled in the art. Meanwhile, the accompanying drawings and the following description are provided in order to allow those skilled in the art to sufficiently understand the present disclosure, and are not intended to restrict the subject matter described in the claims.

### (Background to an Aspect of the Present Disclosure)

When communication is performed using a plurality of communication channels, a communication channel having a low S/N ratio (signal to noise ratio) may be present in the plurality of communication channels due to the influence of noise. In addition, noise may be present in the entirety (entire communication bandwidth) of the plurality of communication channels depending on the state of a transmission path. In this case, an S/N ratio deteriorates in the entirety of the plurality of communication channels. For this reason, in some cases, a communication error increases, a communication delay increases, and communication performance deteriorates.

Hereinafter, a description will be given of a communication apparatus and a communication method which are capable of preventing communication performance from deteriorating even when the state of a transmission path is defective in the entire bandwidth.

### (First Embodiment)

### [Configurations and the Like]

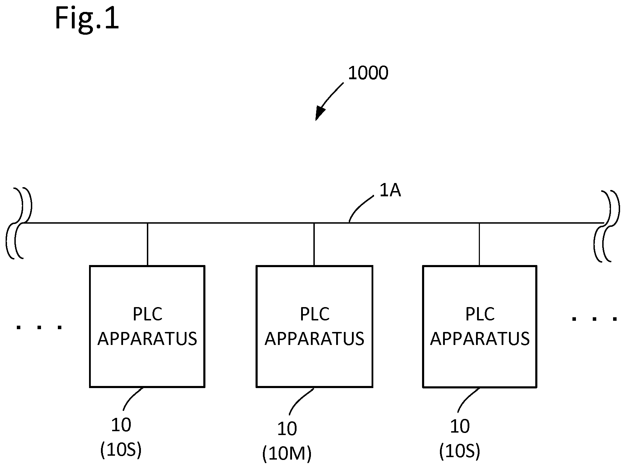

Fig. 1 is a schematic diagram illustrating a configuration example of a communication system 1000 in a first embodiment. In the communication system 1000, a plurality of PLC (Power Line Communication) apparatuses 10 is connected to a power line 1A. The PLC apparatus 10 performs power line communication, for example, in conformity to the standard of IEEE (The Institute of Electrical and Electronics Engineers) 1901.

The PLC apparatus 10 may be, for example, a PLC modem or an electrical instrument having a PLC modem built-in. This electrical instrument includes, for example, household electrical appliances such as a television, a telephone, a video cassette recorder, and a set-top box, or office instruments such as a personal computer, a facsimile, and a printer. In addition, the PLC apparatus 10 includes infrastructure instruments such as a control instrument for a streetlight and a smart meter which is a next-generation electrical energy meter, or security instruments such as a sensor instrument and a monitoring camera which are represented by the IoT (Internet of things).

The PLC apparatus 10 includes one or more PLC apparatuses 10M operating as a master device and one or more PLC apparatuses 10S operating as a slave device. When the master device and the slave device are not particularly distinguished from each other, these devices are simply described as the PLC apparatus 10.

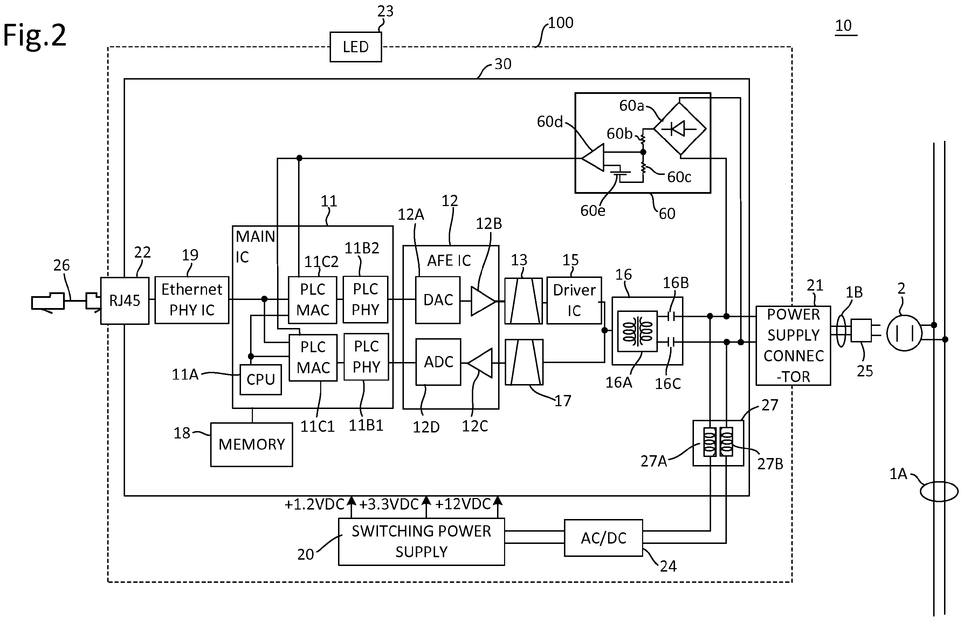

Fig. 2 is a block diagram illustrating a hardware configuration example of the PLC apparatus 10. The PLC apparatus 10 includes a circuit module 30 and a switching power supply 20.

The switching power supply 20 supplies various types of voltage (for example, +1.2 V, +3.3 V, and +12 V) to the circuit module 30, and includes, for example, a switching transformer and a DC-DC converter (both are not shown in the drawing). Power to the switching power supply 20 is supplied from a power supply connector 21 through an impedance upper circuit 27 and an AC-DC converter 24. The power supply connector 21 is provided, for example, on the back surface of a housing 100 included in the PLC apparatus 10.

The circuit module 30 includes a main IC (Integrated Circuit) 11 and an AFE IC (Analog Front END Integrated Circuit) 12. In addition, the circuit module 30 includes a low pass filter (LPF) 13, a driver IC 15, a coupler 16, a band pass filter (BPF) 17, and a memory 18. In addition, the circuit module 30 includes an Ethernet (Registered Trademark) PHY IC (Physical layer Integrated Circuit) 19 and an AC cycle detector 60.

The coupler 16 is connected to the power supply connector 21, and is further connected to the power line 1A through a power supply cable 1B, a power supply plug 25, and a receptacle 2. An LED 23 operates as a display unit, and is connected to the main IC 11. A LAN cable 26 for connection to various types of device (for example, a personal computer) is connected to a modular jack 22. The modular jack 22 is provided, for example, on the back surface of the housing 100. The LED 23 is provided, for example, on the front surface of the housing 100.

The main IC 11 includes a CPU (Central Processing Unit) 11A and PLC MAC (Power Line Communication Media Access Control layer) blocks 11C1 and 11C2. In addition, the main IC 11 includes PLC PHY (Power Line Communication Physical layer) blocks 11B1 and 11B2.

The CPU 11A has a 32-bit RISC (Reduced Instruction Set Computer) processor mounted therein. The PLC MAC block 11C2 manages a MAC layer (Media Access Control layer) of a transmission signal, and the PLC MAC block 11C1 manages a MAC layer of a received signal. The PLC PHY block 11B2 manages a PHY layer (Physical layer) of a transmission signal, and the PLC PHY block 11B1 manages a PHY layer of a received signal.

The AFE IC 12 includes a DA converter (DAC; Digital to Analog Converter) 12A, an AD converter (ADC; Analog to Digital Converter) 12D, and variable gain amplifiers (VGA) 12B and 12C.

The coupler 16 includes a coil transformer 16A and coupling capacitors 16B and 16C. Meanwhile, the CPU 11A controls operations of the PLC MAC blocks 11C1 and 11C2 and the PLC PHY blocks 11B1 and 11B2 using data which is stored in the memory 18, and controls the entirety of the PLC apparatus 10.

In Fig. 2, the PLC apparatus 10 includes the PLC MAC blocks 11C1 and 11C2 and the PLC PHY blocks 11B1 and 11B2, and it is shown that these blocks are used for transmission and reception, respectively. Instead thereof, the PLC apparatus 10 may include a PLC MAC block 11C and a PLC PHY block 11B (which are not shown), and may be used in common for transmission and reception.

Meanwhile, the PLC MAC blocks 11C1 and 11C2 are simply also referred to as the PLC MAC block 11C. The PLC PHY blocks 11B1 and 11B2 are also simply referred to as the PLC PHY block 11B.

Similarly to a general modem, the main IC 11 is, for example, an electrical circuit (LSI; Large Scale Integration) that performs signal processing including basic control or modulation and demodulation for data communication. For example, the main IC 11 modulates received data which is output from a communication terminal (for example, a PC) through the modular jack 22, and outputs the modulated data as a transmission signal (data) to the AFE IC 12. In addition, the main IC 11 demodulates a signal which is input from the power line 1A side through the AFE IC 12, and outputs the demodulated signal as a received signal (data) to a communication terminal (for example, a PC) through the modular jack 22.

The AC cycle detector 60 generates a synchronizing signal which is required for each of the PLC apparatuses 10 to perform control at a common timing. The AC cycle detector 60 includes a diode bridge 60a, resistors 60b and 60c, a DC (Direct Current) power supply unit 60e, and a capacitor 60d.

The diode bridge 60a is connected to the resistor 60b. The resistor 60b is connected in series to the resistor 60c. The resistors 60b and 60c are connected in parallel to one terminal of the capacitor 60d. The DC power supply unit 60e is connected to the other terminal of the capacitor 60d.

Specifically, the generation of the synchronizing signal by the AC cycle detector 60 is performed as follows. That is, the detector detects the zero-crossing point of a voltage having an alternating-current power waveform AC (alternating-current waveform composed of a sinusoidal wave of 50 Hz or 60 Hz) of a commercial power supply which is supplied to the power line 1A, and generates the synchronizing signal based on the timing of the zero-crossing point. An example of the synchronizing signal includes a square wave composed of a plurality of pulses synchronized with the zero-crossing point of an alternating-current power waveform.

Meanwhile, the AC cycle detector 60 is not essential. In this case, a synchronizing signal included in, for example, a communication signal is used in synchronization between the PLC apparatuses 10.

Communication by the PLC apparatus 10 is performed schematically as follows.

Data which is input from the modular jack 22 is sent to the main IC 11 through the Ethernet (Registered Trademark) PHY IC 19, and a digital signal is generated by performing digital signal processing. The generated digital signal is converted into an analog signal by the DA converter 12A of the AFE IC 12. The converted analog signal is output to the power line 1A through the low pass filter 13, the driver IC 15, the coupler 16, the power supply connector 21, the power supply cable 1B, the power supply plug 25, and the receptacle 2.

In addition, a signal which is received from the power line 1A is sent to the band pass filter 17 through the coupler 16, and is converted into a digital signal by the AD converter 12D after the gain thereof is adjusted by the variable gain amplifier 12C of the AFE IC 12. The converted digital signal is sent to the main IC 11, and is converted into digital data by performing digital signal processing. The converted digital data is output from the modular jack 22 through the Ethernet (Registered Trademark) PHY IC 19.

### [Details of Communication System]

Next, the details of a communication system which is used by the communication system 1000 will be described.

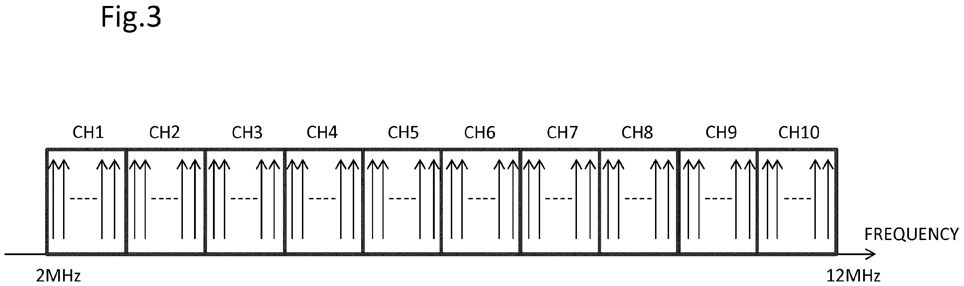

Fig. 3 is a schematic diagram illustrating an example of communication frequencies and virtual channels (also referred to as communication channels) which are used by the PLC apparatus 10. In Fig. 3, 2 MHz to 12 MHz are illustrated as the bandwidth of communication frequencies. In addition, in the bandwidth of communication frequencies, a communication channel CH is divided per MHz, and ten communication channels CH (CH1 to CH10) are provided. Each of the communication channels CH has, for example, 32 subcarriers. Therefore, ten communication channels CH1 to CH10 have 320 subcarriers.

Meanwhile, the bandwidth of communication frequencies, the number of communication channels, and the number of subcarriers are an example, and may be other than these. The number of communication channels is two or more.

In addition, a communication frame FR which is communicated by the PLC apparatus 10 includes a preamble (PB), frame control (FC), and a frame body (Fb). The communication frame FR is formed in any array in a time domain and a frequency domain.

Data of the preamble (PB) is a fixed value, and all the data are, for example, "1". The preamble data is used in order to perform, for example, carrier detection, synchronization, or demodulation. Data of the frame control (FC) and the frame body (Fb) is an unfixed value. In the present embodiment, one preamble is provided for each predetermined frequency bandwidth (for example, per MHz) in, for example, the communication frame FR. Meanwhile, one preamble may be provided in the entirety of the communication frame FR.

As an example, the communication frame FR can include a maximum of ten communication channels CH1 to CH10. As described later, in the present embodiment, the number of communication channels CH included in the communication frame FR is variable in accordance with a DPC (Dynamic Power Control) mode.

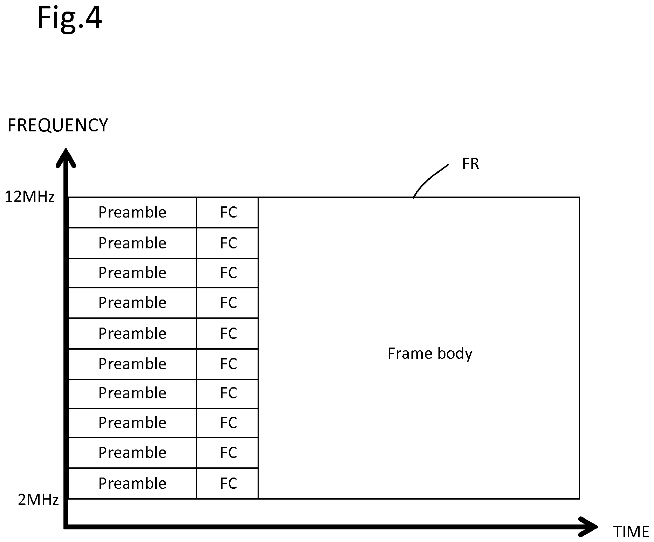

Fig. 4 is a schematic diagram illustrating an example of a frame format of the communication frame FR. In Fig. 4, the communication frame FR includes the same PB and FC for each communication channel CH. In Fig. 4, ten communication channels CH are included in the communication frame FR, and one Fb is included in the entirety of ten communication channels CH. Information of the frame format of the communication frame FR is stored in the memory 18.

The frame format of the communication frame FR shown in Fig. 4 is an example, and other frame formats may be adopted. For example, in Fig. 4, diversity is not considered in the Fb, but the Fb may be divided and provided in a time domain or a frequency domain in the communication frame FR, in consideration of the diversity.

In addition, in the present embodiment, a DPC mode described later is adopted, and thus the number of communication channels CH used in communication changes. For this reason, the number of communication channels CH included in the communication frame FR also changes.

### [Details of DPC Mode]

The CPU 11A sets a DPC (Dynamic Power Control) mode for adjusting power used in communication. In addition, when the DPC mode is set, the CPU 11A determines the power used in communication, and determines the communication channel CH used in communication. The communication channel CH, used in communication, to be determined is as to which communication channel is used (for example, which of CH1 to CH5 is used), the number of channels of the communication channel CH, or the like. Setting information of the DPC mode is stored in the memory 18.

In addition, the DPC mode is set by, for example, the PLC apparatus 10M. The PLC apparatus 10M notifies the PLC apparatus 10S of information of the set DPC mode. The information of the DPC mode includes information of power for each communication channel CH (per communication channel CH) which is set, and information (for example, identification information of the communication channel CH or information of the number of communication channels CH) of the communication channel CH which is used. Each of the PLC apparatuses 10S can recognize a DPC mode to which a master device is adopted, based on the notice of the information of the DPC mode by the PLC apparatus 10M, and can perform communication in the communication system 1000 based on the DPC mode to which the master device is adopted.

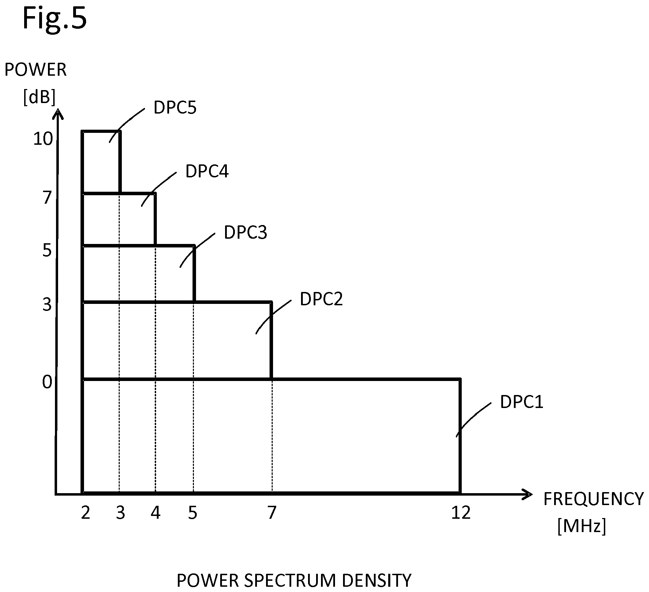

Fig. 5 is a schematic diagram illustrating a relationship between the number of communication channels CH and power per communication channel CH which are used in communication in each DPC mode.

The number of DPC modes is plural. In Fig. 5, DPC modes 1 to 5 are illustrated. Meanwhile, the DPC mode n is also abbreviated to DPCn. In the DPC mode 1, ten communication channels CH are used, and the bandwidth thereof is 10 MHz. In the DPC mode 2, five communication channels CH are used, and the bandwidth thereof is 5 MHz. In the DPC mode 3, three communication channels CH are used, and the bandwidth thereof is 3 MHz. In the DPC mode 4, two communication channels CH are used, and the bandwidth thereof is 2 MHz. In the DPC mode 5, one communication channel CH is used, and the bandwidth thereof is 1 MHz.

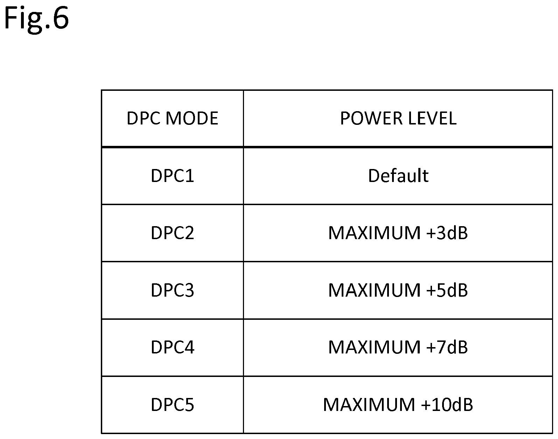

Fig. 6 is a schematic diagram illustrating a relationship between each DPC mode and a power level.

Communication power in the DPC mode 1 is -45 dBm/Hz, and this power is set to a default. In this case, communication power in the DPC mode 2 is -42 dBm/Hz, and is greater than by 3 dB than the communication power in the DPC mode 1. Communication power in the DPC mode 3 is -40 dBm/Hz, and is greater than by 5 dB than the communication power in the DPC mode 1. Communication power in the DPC mode 4 is -38 dBm/Hz, and is greater than by 7 dB than the communication power in the DPC mode 1. Communication power in the DPC mode 5 is -35 dBm/Hz, and is greater than by 10 dB than the communication power in the DPC mode 1.

Meanwhile, the number of communication channels CH and power for each communication channel which are used in communication change in accordance with the DPC mode, but power (total power) for all the communication channels CH used in communication almost does not change. Therefore, the power decreases as the number of communication channels CH used in communication becomes larger, and the power increases as the number of communication channels CH used in communication becomes smaller. For example, when the number of communication channels CH is changed from ten to five, power per communication channel CH is doubled.

For example, when the number of communication channels CH is changed from ten to five, the CPU 11A increases the power per communication channel CH so that, for example, the total power become unchanging in accordance with such a change. Thereby, the signal level of a signal capable of being transmitted through the power line 1A increases, and the probability of communication through the power line 1A succeeding improves.

For example, when the number of communication channels CH is changed from five to ten, the CPU 11A reduces the power per communication channel CH so that, for example, the total power become unchanging in accordance with such the change. Thereby, the signal level of a signal capable of being transmitted through the power line 1A decreases, interference with communication by another PLC apparatus 10 is reduced, and the number of communication channels CH increases, thereby allowing communication efficiency to be improved.

Meanwhile, in Fig. 6, DPC mode 1 in which power per communication channel CH is minimum is assumed as a default of the DPC mode, but the DPC mode 5 in which the power per communication channel CH is maximum can also be assumed.

### [Details of Round Robin]

When the DPC mode is set to the DPC mode 2 to the DPC mode 5, the CPU 11A may change the communication channel CH using a round robin. In the round robin, the CPU 11A changes the frequency bandwidth of the communication channel CH without changing the number of communication channels CH used in communication. Setting information about the round robin is held in the memory 18. The setting information about the round robin includes, for example, information as to how the communication channel CH is shifted by the round robin. The PLC apparatus 10 can detect an available frequency using the round robin without increasing the power per communication channel CH.

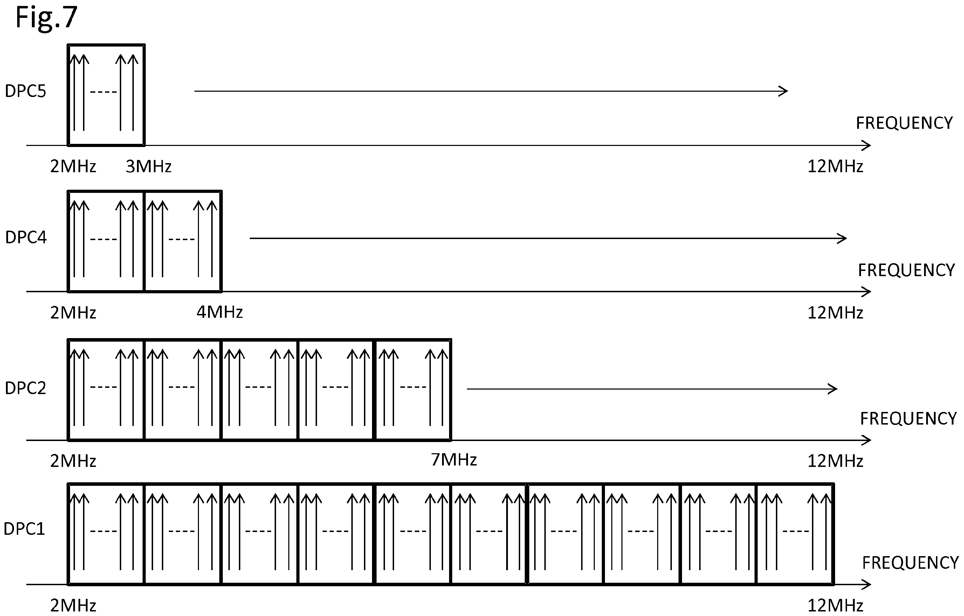

Fig. 7 is a schematic diagram illustrating a round robin in each DPC mode. In Fig. 7, the available bandwidth of communication frequencies is 2 MHz to 12 MHz, and a case is illustrated in which at least a portion of this bandwidth is used in communication.

In the DPC mode 1, since ten communication channels CH are used, and the entirety of the available communication channels CH1 to CH10 is used, the round robin is not able to be adopted. In this case, the CPU 11A sets the communication channels CH1 to CH10 as communication channels which are used (communication channels to be used).

In the DPC mode 2, five communication channels CH are used. The CPU 11A may set, for example, CH1 to CH5, CH6 to CH10, CH1 to CH5, CH6 to CH10, ···, in this order, as communication channels to be used, using the round robin. In addition, the CPU 11A may set CH1 to CH5, CH2 to CH6, CH3 to CH7, ···, in this order, as communication channels to be used, using the round robin. In addition, the CPU 11A selects five communication channels CH arbitrarily, and may set these communication channels as communication channels to be used by repeating such a selection. The communication channel CH which is arbitrarily selected may not be a communication channel CH adjacent thereto.

In the DPC mode 4, two communication channels CH are used. The CPU 11A may set, for example, CH1 and CH2, CH3 and CH4, CH5 and CH6, CH7 and CH8, CH9 and CH10, CH1 and CH2, ···, in this order, as communication channels to be used, using the round robin. In addition, the CPU 11A may set CH1 and CH2, CH2 and CH3, CH3 and CH4, ···, in this order, as communication channels to be used, using the round robin. In addition, the CPU 11A may set CH1 and CH3, CH2 and CH4, CH5 and CH7, CH6 and CH8, ···, in this order, as communication channels to be used, using the round robin. In addition, the CPU 11A selects two communication channels CH arbitrarily, and may set these communication channels as communication channels to be used by repeating such a selection. The communication channel CH which is arbitrarily selected may not be a communication channel CH adjacent thereto.

In the DPC mode 5, one communication channel CH is used. The CPU 11A may set, for example, CH1, CH2, CH3, ···, CH8, CH9, CH10, CH1, CH2, CH3, ···, in this order, as communication channels to be used, using the round robin. In addition, the CPU 11A may set, for example, CH1, CH3, CH5, CH7, CH9, CH2, CH4, CH6, CH8, CH10, CH1, CH3, ···, in this order of, as communication channels to be used, using the round robin. In addition, the CPU 11A selects one communication channel CH arbitrarily, and may set this communication channel as a communication channel to be used by repeating such a selection.

The CPU 11A of the PLC apparatus 10M transmits a predetermined signal through the power line 1A, using the communication channel CH which is arbitrarily set in the round robin. The PLC apparatus 10S having received the predetermined signal returns an ACK signal for the predetermined signal to the PLC apparatus 10M. When the ACK signal is received from all the PLC apparatuses 10S which are targets of communication, the PLC apparatus 10M determines a communication channel CH transmitting the predetermined signal corresponding to the ACK signal, as a communication channel CH used in communication after that. This determination information is held in the memory 18.

In addition, the CPU 11A of the PLC apparatus 10M may cause information of the set DPC mode and information of a communication channel to be used which is determined in the round robin to be included in the frame header (for example, FC) or FB of the communication frame FR, and transmit these pieces of information to the PLC apparatus 10S. Thereby, the set DPC mode and the information of a communication channel to be used can be shared with each of the PLC apparatuses 10 in the communication system 1000.

### [Operations and the Like]

Next, an operation of the PLC apparatus 10 will be described.

Here, a case is illustrated in which the PLC apparatus 10M changes the DPC mode. Meanwhile, information of the PLC apparatus 10 as a transmission destination of a beacon signal for setting the DPC mode is registered in advance with, for example, the memory 18. The information of the PLC apparatus 10 includes identification information of the PLC apparatus 10 (for example, information of a MAC address and an IP address of the PLC apparatus 10) or authentication information in which the PLC apparatus 10 is authenticated to be valid as the transmission destination of a beacon signal. The PLC apparatus 10 having authentication information registered with the memory 18 is also referred to as an "authenticated PLC apparatus". Herein, a case is illustrated in which the number of authenticated PLC apparatuses is ten, but there is no limitation thereto.

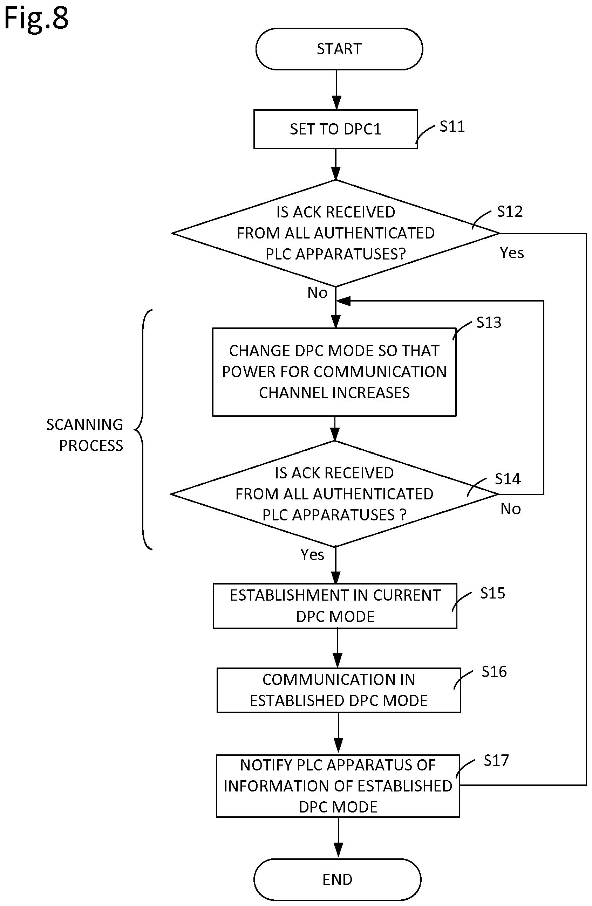

Fig. 8 is a flow diagram illustrating a first operation example of the PLC apparatus 10M. Fig. 8 illustrates an operation when the PLC apparatus 10M changes the DPC mode in order to increase the power for each communication channel CH.

First, the CPU 11A sets the DPC mode 1 as a default of the DPC mode, and holds setting information in the memory 18 (S11). Meanwhile, as a default, any of the DPC modes 2 to 4 may be set rather than the DPC mode 1.

The CPU 11A transmits a beacon signal to the authenticated PLC apparatus (for example, PLC apparatus 10S which has already been authenticated in the PLC apparatus 10M) through a communication apparatus such as the AFE IC 12, in accordance with the DPC mode 1. This beacon signal is sent, for example, periodically from the PLC apparatus 10M to the PLC apparatus 10S in the communication system 1000. Meanwhile, the communicating device is, for example, a device, inclusive of the AFE IC 12, which is disposed closer to the power supply plug 25 side than the AFE IC 12.

The CPU 11A monitors whether an ACK signal for an inquiry signal regarding the beacon signal being capable of being correctly received (LINK normal state) has been received by a communication apparatus. The CPU 11A determines whether the ACK signal has been received from all the authenticated PLC apparatuses (S12).

When the ACK signal is received from all the authenticated PLC apparatuses, the PLC apparatus 10 terminates the process of Fig. 8. Since it can be presumed that signal power is sufficient, and a device which has not received the beacon signal in the authenticated PLC apparatus is not present, the power per communication channel CH is not increased.

On the other hand, when at least one ACK signal is not received from the authenticated PLC apparatus, the CPU 11A changes the DPC mode so that the power per communication channel CH increases (S13).

The CPU 11A temporarily sets the DPC mode 2, for example, when the DPC mode 1 is set, and temporarily sets the DPC mode 3 when the DPC mode 2 is set. Meanwhile, since it may be preferable that the power per communication channel CH increases, the DPC mode 3 or the DPC mode 4 may be temporarily set next to the DPC mode 1. A method of selecting a DPC mode which is next set is held in, for example, the memory 18, and is referenced by the CPU 11A.

The CPU 11A transmits the beacon signal to the authenticated PLC apparatus through a communication apparatus, in accordance with the DPC mode (for example, DPC mode 2) which is temporarily set.

In addition, the CPU 11A may transmit the beacon signal while changing the communication channel to be used using the round robin, in accordance with the DPC mode which is temporarily set.

In a case of, for example, the DPC mode 2, ACK is assumed to be received from the total number (ten) of authenticated PLC apparatuses in the communication channels CH1 to CH5. In this case, the CPU 11A holds setting information including communication using the communication channels CH1 to CH5 in the DPC mode 2, in the memory 18.

In addition, in a case of, for example, the DPC mode 2, it is assumed that ACK is received from half (five) of the authenticated PLC apparatuses in the communication channels CH1 to CH5, and that ACK is received from half (five) of the remaining authenticated PLC apparatuses in the communication channels CH6 to CH10. In this case, the CPU 11A can receive all the ACKs by performing the round robin, and thus holds information of a method of transitioning a frequency using a round robin, in the memory 18.

The CPU 11A monitors whether an ACK signal for an inquiry signal regarding the beacon signal being capable of being correctly received (LINK normal state) has been received by a communication apparatus. The CPU 11A determines whether the ACK signal has been received from all the authenticated PLC apparatuses (S14).

When at least one ACK signal is not received from the authenticated PLC apparatus, the PLC apparatus 10 proceeds to S13, transmits the beacon signal by increasing the power per communication channel, and attempts to receive the ACK signal again.

On the other hand, when the ACK signal is received from all the authenticated PLC apparatuses, the CPU 11A establishes (fixes) the DPC mode which is temporarily set as a new DPC mode, and holds the mode in the memory 18 (S15).

The CPU 11A communicates communication data through a communication apparatus, using the communication frame FR, in accordance with the established DPC mode (S16). Here, the CPU 11A communicates the communication data, as necessary, through the communication apparatus, based on the round robin.

For example, the CPU 11A refers to the setting information which is held in the memory 18, and performs communication through the communication apparatus, in the DPC mode 2, using the communication channels CH1 to CH5. In addition, the CPU 11A refers to information of a method of transitioning a frequency, for example, based on the round robin which is held in the memory 18, and performs communication through the communication apparatus, alternately using the communication channels CH1 to CH5 and the communication channels CH6 to CH10.

The CPU 11A notifies the authenticated PLC apparatus of information of the established DPC mode through the communication apparatus (S17). This notification is performed by, for example, the beacon signal. Thereby, the PLC apparatus 10M can share the information of the DPC mode between the authenticated PLC apparatuses.

According to the process of Fig. 8, the PLC apparatus 10M transmits a signal to all the authenticated PLC apparatuses which are assumed to be communication partners. When ACK for a signal is not received from at least some of the authenticated PLC apparatuses, the PLC apparatus 10M transmits a signal by increasing the power for each communication channel CH, and performs a scanning process of confirming ACK for a signal. Therefore, whenever the scanning process is performed, the number of communication channels to be used decreases, and the power for each communication channel CH increases. By the power increasing, there is a tendency for a signal to reach the authenticated PLC apparatus, and the reception rate of ACK becomes higher. Therefore, even when the state of a transmission path deteriorates throughout the entirety of the communication channels CH1 to CH10, the PLC apparatus 10M can improve communication performance.

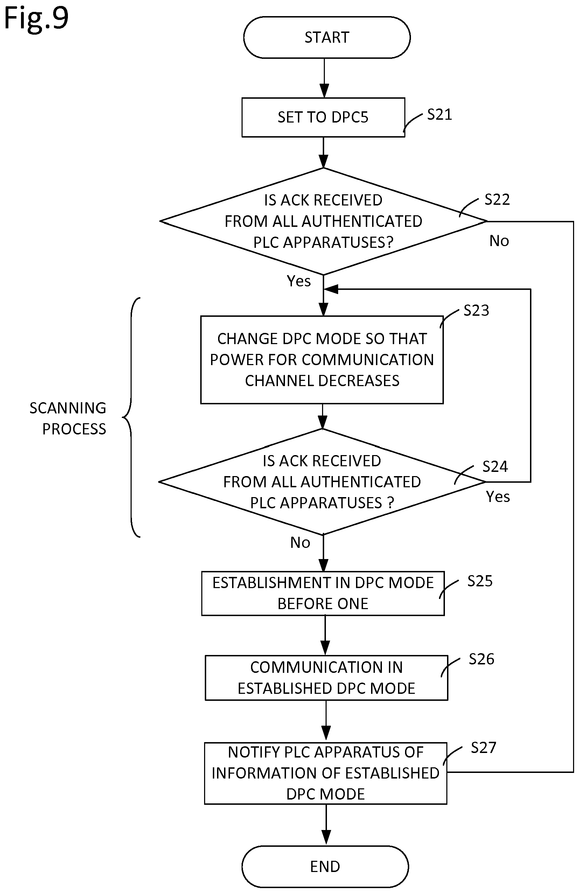

Fig. 9 is a flow diagram illustrating a second operation example of the PLC apparatus 10M. Fig. 9 illustrates an operation when the PLC apparatus 10M changes the DPC mode in order to reduce the power for each communication channel.

First, the CPU 11A sets the DPC mode 5 as a default of the DPC mode, and holds setting information in the memory 18 (S21). Meanwhile, as a default, any of the DPC modes 2 to 4 may be set rather than the DPC mode 5.

The CPU 11A transmits the beacon signal to the authenticated PLC apparatus through the communication apparatus, in accordance with the DPC mode 5. This beacon signal is sent from the PLC apparatus 10M to the PLC apparatus 10S, for example, periodically, in the communication system 1000.

The CPU 11A monitors whether an ACK signal for an inquiry signal regarding the beacon signal being capable of being correctly received (LINK normal state) has been received by a communication apparatus. The CPU 11A determines whether the ACK signal has been received from all the authenticated PLC apparatuses (S22).

When at least one ACK signal is not received from the authenticated PLC apparatus, the PLC apparatus 10 terminates a process of Fig. 9. That is, since it can be presumed that signal power is insufficient, and that a device in which the beacon signal is not received normally in the authenticated PLC apparatus is present, the power per communication channel CH is not reduced.

On the other hand, when the ACK signal is received from all the authenticated PLC apparatuses, the CPU 11A changes the DPC mode so that the power per communication channel CH is reduced (S23).

The CPU 11A temporarily sets the DPC mode 4, for example, when the DPC mode 5 is set, and temporarily sets the DPC mode 3 when the DPC mode 4 is set. Meanwhile, since it may be preferable that the power per communication channel CH increases, the DPC mode 3 or the DPC mode 2 may be temporarily set next to the DPC mode 5. A method of selecting a DPC mode which is next set is held in, for example, the memory 18, and is referenced by the CPU 11A.

The CPU 11A transmits the beacon signal to the authenticated PLC apparatus through the communication apparatus, in accordance with the DPC mode (for example, DPC mode 4) which is temporarily set.

In addition, the CPU 11A may transmit the beacon signal while changing the communication channel to be used using the round robin, in accordance with the DPC mode which is temporarily set.

In a case of, for example, the DPC mode 4, ACK is assumed to be received from the total number (ten) of authenticated PLC apparatuses in the communication channels CH1 and CH2. In this case, the CPU 11A holds setting information including communication using the communication channels CH1 and CH2 in the DPC mode 4, in the memory 18.

In addition, in a case of, for example, the DPC mode 4, ACK is assumed to be received from different authenticated PLC apparatuses for every 1/5 (every two) of the total number of authenticated PLC apparatuses, in the communication channels CH1 and CH2, CH3 and CH4, CH5 and CH6, CH7 and CH8, and CH9 and CH10. In this case, the CPU 11A can receive all the ACKs by performing the round robin, and thus holds information of a method of transitioning a frequency using a round robin, in the memory 18.

The CPU 11A monitors whether an ACK signal for an inquiry signal regarding the beacon signal being capable of being correctly received (LINK normal state) has been received by a communication apparatus. The CPU 11A determines whether the ACK signal has been received from all the authenticated PLC apparatuses (S24).

When the ACK signal is received from all the authenticated PLC apparatuses, the PLC apparatus 10 proceeds to S13, transmits the beacon signal by reducing the power per communication channel, and attempts to receive the ACK signal again.

On the other hand, when at least a portion of ACK signal is not received from the authenticated PLC apparatus, the CPU 11A establishes the DPC mode which is temporarily set before one current DPC mode during temporary setting, as a new DPC mode, and holds the mode in the memory 18 (S25).

The CPU 11A communicates communication data through a communication apparatus, using the communication frame FR, in accordance with the established DPC mode (S26). Here, communication data is communicated, as necessary, by the round robin.

For example, the CPU 11A refers to the setting information which is held in the memory 18, and performs communication through the communication apparatus, in the DPC mode 4, using the communication channels CH1 and CH2. In addition, the CPU 11A refers to information of a method of transitioning a frequency, for example, based on the round robin which is held in the memory 18, and performs communication through the communication apparatus, using the communication channels CH1 and CH2, CH3 and CH4, CH5 and CH6, CH7 and CH8, and CH9 and CH10 in this order.

The CPU 11A notifies the authenticated PLC apparatus of information of the established DPC mode through the communication apparatus (S27). This notification is performed by, for example, the beacon signal. Thereby, the PLC apparatus 10M can share the information of the DPC mode between the authenticated PLC apparatuses.

According to the process of Fig. 9, the PLC apparatus 10M transmits a signal to all the authenticated PLC apparatuses which are assumed to be communication partners. When ACK for a signal is received from all the authenticated PLC apparatuses, the PLC apparatus 10M transmits a signal by reducing the power for each communication channel, and performs a scanning process of confirming ACK for a signal. Therefore, whenever the scanning process is performed, the number of communication channels to be used increases, and the power for each communication channel decreases. The communication efficiency of communication data improves by an increase in the number of communication channels to be used, and thus it is possible to speed up communication.

### [Effects and the Like]

In this manner, the PLC apparatus 10 can perform communication efficiently in accordance with the state of the transmission path. For example, when noise is present in the entirety of a plurality of communication channels CH, the PLC apparatus 10 increases the power per communication channel CH by reducing the number of communication channels CH used in communication. Thereby, the PLC apparatus 10 can improve the S/N ratio of the communication channel CH used in communication with another PLC apparatus 10.

Therefore, even when the characteristics of the transmission path are defective throughout the entirety of the communication bandwidth (for example, 2 MHz to 12 MHz), the power per bandwidth is increased by reducing the bandwidth which is used, and thus it is possible to improve resistance to noise. Thereby, even when characteristics are defective in the entire bandwidth of the transmission path, the PLC apparatus 10 can suppress an increase in communication error, and suppress an increase in communication delay, and prevent communication performance from deteriorating.

In addition, when noise is not present in a portion of a plurality of communication channels CH, the PLC apparatus 10 may reduce the power per communication channel by increasing the number of communication channels CH used in communication. Thereby, the PLC apparatus 10 suppresses power consumption, and thus can improve the transmission efficiency of communication with another PLC apparatus 10.

In addition, the PLC apparatus 10 changes the communication bandwidth without changing the communication bandwidth using the round robin, and thus can detect an available communication channel without increasing the power per communication channel CH.

### (Other Embodiments)

As described above, the first embodiment has been described as the illustration of a technique in the present disclosure. However, the technique in the present disclosure is not limited thereto, and can also be applied to embodiments in which changes, substitutions, additions, omissions, and the like are performed. In addition, the respective embodiments may be combined with each other.

In the first embodiment, a case has been illustrated in which the PLC apparatus 10 performs power control in association with a change in the number of communication channels CH. Meanwhile, the PLC apparatus 10 may not associate a change in the number of communication channels CH with power control. For example, even when the number of communication channels CH is reduced and power is not increased, it is possible to expect an improvement in communication performance by reducing communication interference.

In the first embodiment, an example is illustrated in which the PLC apparatus 10M as a master device sets the DPC mode, and notifies another PLC apparatus 10 of the information of the DPC mode. Meanwhile, the PLC apparatus 10S as a slave device may set the DPC mode, and notify another PLC apparatus 10 of the information of the DPC mode. In addition, without distinguishing the master device from the slave device, any of the PLC apparatuses 10 may set the DPC mode, and notify another PLC apparatus 10 of the information of the DPC mode.

In the first embodiment, an example has been illustrated in which the communication system 1000 is a power line communication system that performs communication in accordance with the power line communication system. Meanwhile, the communication system 1000 may be a communication system that performs communication in accordance with another communication system (for example, wireless LAN system).

In the first embodiment, a processor may be configured physically in any way. In addition, when a programmable processor is used, process contents can be changed by changing a program, and thus it is possible to increase the degree of freedom of a design of the processor. The processor may be constituted by one semiconductor chip, and may be constituted physically by a plurality of semiconductor chips. When the processor is constituted by a plurality of semiconductor chips, each control in the first and second embodiments may be realized by a separate semiconductor chip. In this case, it can be considered that one processor is constituted by the plurality of semiconductor chips. In addition, the processor may be constituted by a member (such as a capacitor) having a separate function from that of the semiconductor chip. In addition, one semiconductor chip may be configured to realize the function of the processor and other functions.

### (Outline of an Aspect of the Present Disclosure)

A communication apparatus of an aspect of the present disclosure performs a communication with another communication apparatus using a frequency bandwidth including a plurality of communication channels CH. The communication apparatus includes a processor and a communicating device. The communicating device transmits a signal to another communication apparatus using a first number of communication channels CH included in the frequency bandwidth, and receives a response to the signal from the another communication apparatus using the first number of communication channels CH. The processor changes the number of communication channels CH used in communication with the another communication apparatus, from a first number to a second number, in accordance with the response to the signal, and controls power for each of the communication channels CH used in communication with the another communication apparatus, based on the second number.

The communication apparatus is, for example, the PLC apparatus 10. The processor is, for example, the main IC 11. The communicating device is, for example, a device, inclusive of the AFE IC 12, which is disposed closer to the power supply plug 25 side than the AFE IC 12.

Thereby, the communication apparatus adjusts the number of communication channels and the power for each of the communication channels even when the state of a transmission path is defective in the entire bandwidth, and thus it is possible to prevent communication performance from deteriorating.

In addition, in this communication apparatus, the first number may be more than the second number.

Thereby, the communication apparatus reduces the number of communication channels used, and can communicate a signal by increasing the power of each communication channel increasing. Therefore, the communication apparatus improves a reception rate of a response to the signal and prevents communication performance from deteriorating.

In addition, in this communication apparatus, the first number may be less than the second number.

Thereby, the communication apparatus increases the number of communication channels used, and can communicate a signal by decreasing the power of each communication channel increasing. Therefore, the communication apparatus improves communication performance of a communication data and can make a rapid communication.

In addition, in this communication apparatus, the communicating device may transmit the signal to a plurality of other communication apparatuses using the first number or the second number of communication channels CH included in the frequency bandwidth. When the response has not been received from at least one of the plurality of other communication apparatuses using the first number or the second number of communication channels CH, the communicating device may perform a communication using one or more other communication channels CH included in the frequency bandwidth, without changing the number of communication channels CH used in a communication.

Thereby, the communication apparatus can perform communication using various communication channels CH without changing the power for each of the communication channels. Therefore, the communication apparatus can prevent excessive communication interference from being generated, and thus it is possible to improve the probability of success in communication with another communication apparatus.

In addition, in this communication apparatus, the processor may change the communication channels used in the communication with the other communication apparatuses in a round-robin scheduling in the frequency bandwidth.

Thereby, the communication apparatus changes the communication channels CH used without changing a communication channel width, and can detect an available communication channel CH without increasing power for each of the communication channels.

In addition, in this communication apparatus, the communicating device may transmit identification information of the second number of communication channels CH to another communication apparatus.

Thereby, another communication apparatus can identify each communication channel in which the number of channels is changed, and perform communication with a communication apparatus, using a communication channel after change.

In addition, in this communication apparatus, the communicating device may perform communication using the power line 1A.

Thereby, even when the state of the power line 1A is defective in the entire bandwidth, the communication apparatus adjusts the number of communication channels and the power per communication channel, and thus it is possible to prevent communication performance from deteriorating.

In addition, a communication method of an aspect of the present disclosure is a communication method in a first communication apparatus that performs a communication with a second communication apparatus using a frequency bandwidth including a plurality of communication channels. The method includes transmitting a signal to a second communication apparatus using a first number of communication channels included in the frequency bandwidth, receiving a response to the signal from the second communication apparatus using the first number of communication channels, changing the number of communication channels used in communication, from the first number to a second number in accordance with the response to the signal, and controlling power for each of the communication channels used in the communication based on the second number.

Thereby, even when the state of a transmission path is defective in the entire bandwidth, the communication apparatus adjusts the number of communication channels and the power per communication channel, and thus it is possible to prevent communication performance from deteriorating.

In addition, in this communication method, the first number may be more than the second number.

Thereby, the communication apparatus reduces the number of communication channels used, and can communicate a signal by increasing the power of each communication channel increasing. Therefore, the communication apparatus improves a reception rate of a response to the signal and prevents communication performance from deteriorating.

In addition, in this communication method, the first number may be less than the second number.

Thereby, the communication apparatus increases the number of communication channels used, and can communicate a signal by decreasing the power of each communication channel increasing. Therefore, the communication apparatus improves communication performance of a communication data and can make a rapid communication.

In addition, in this communication method, the signal is transmitted to a plurality of second communication apparatuses using the first number or the second number of communication channels CH included in the frequency bandwidth. When the response has not been received from at least one of the plurality of second communication apparatuses using the first number or the second number of communication channels CH, a communication may be performed using one or more other communication channels CH included in the frequency bandwidth, without changing the number of communication channels CH used in a communication.

Thereby, the communication apparatus can perform communication using various communication channels CH without changing the power for each of the communication channels. Therefore, the communication apparatus can prevent excessive communication interference from being generated, and thus it is possible to improve the probability of success in communication with another communication apparatus.

In addition, in this communication method, the communication channels used in the communication with the plurality of second communication apparatuses may be changed in a round-robin scheduling in the frequency bandwidth.

Thereby, the communication apparatus changes the communication channels CH used without changing a communication channel width, and can detect an available communication channel CH without increasing power for each of the communication channels.

In addition, in this communication method, identification information of the second number of communication channels CH may be transmitted to plurality of second communication apparatuses.

Thereby, another communication apparatus can identify each communication channel in which the number of channels is changed, and perform communication with a communication apparatus, using a communication channel after change.

In addition, in this communication method, the communication may be performed using the power line 1A.

Thereby, even when the state of the power line 1A is defective in the entire bandwidth, the communication apparatus adjusts the number of communication channels and the power per communication channel, and thus it is possible to prevent communication performance from deteriorating.

The present disclosure is based on a US provisional patent application No. 62/083,810 filed on November 24, 2014.

### Industrial Applicability

Even when the state of a transmission path is defective in the entire bandwidth, the present disclosure is useful in a communication apparatus, a communication method and the like which are capable of preventing communication performance from deteriorating.

### Reference Sings List

1A power line
1B power supply cable
2 receptacle
10, 10M, 10S PLC device
11 main IC
11A CPU
11B1, 11B2 PLC PHY block
11C1, 11C2 PLC MAC block
12 AFE IC
12A DA converter (DAC)
12B, 12C variable gain amplifier (VGA)
12D AD converter (ADC)
13 low pass filter
15 driver IC
16 coupler
16A coil transformer
16B, 16C coupling capacitor
17 band pass filter
18 memory
19 Ethernet (Registered Trademark) PHY IC
20 switching power supply
21 power supply connector
22 modular jack
23 LED
24 AC-DC converter
25 power supply plug
26 LAN cable
27 impedance upper
27A, 27B coil
30 circuit module
60 AC cycle detector
100 housing
1000 communication system
CH1 to CH10 communication channel
FR communication frame

## Claims

1. A communication apparatus that performs a communication with another communication apparatus using a frequency bandwidth including a plurality of communication channels, the communication apparatus comprising:
a processor; and
a communicating device,
wherein the communicating device transmits a signal to the another communication apparatus using a first number of communication channels included in the frequency bandwidth, and receives a response to the signal from the another communication apparatus using the first number of communication channels, and
the processor changes the number of communication channels used in the communication with the another communication apparatus, from the first number to a second number, in accordance with the response to the signal, and controls power for each of the communication channels used in the communication with the another communication apparatus based on the second number.

2. The communication apparatus according to claim 1,
wherein the first number is more than the second number.

3. The communication apparatus according to claim 1,
wherein the first number is less than the second number.

4. The communication apparatus according to any one of claims 1 to 3,
wherein the communicating device transmits the signal to a plurality of other communication apparatuses using the first number or the second number of communication channels included in the frequency bandwidth, and performs a communication using one or more other communication channels included in the frequency bandwidth without changing the number of communication channels used in a communication when the response has not been received from at least one of the plurality of other communication apparatuses using the first number or the second number of communication channels.

5. The communication apparatus according to claim 4,
wherein the processor changes the communication channels used in the communication with the other communication apparatuses in a round-robin scheduling in the frequency bandwidth.

6. The communication apparatus according to any one of claims 1 to 5,
wherein the communicating device transmits identification information of the second number of communication channels to the another communication apparatus.

7. The communication apparatus according to any one of claims 1 to 6,
wherein the communicating device performs the communication through a power line.

8. A communication method in a first communication apparatus that performs a communication with a second communication apparatus using a frequency bandwidth including a plurality of communication channels, the communication method comprising:
transmitting a signal to the second communication apparatus using a first number of communication channels included in the frequency bandwidth;
receiving a response to the signal from the second communication apparatus using the first number of communication channels;
changing the number of communication channels used in communication from the first number to a second number in accordance with the response to the signal; and
controlling power for each of the communication channels used in the communication based on the second number.

9. The communication method according to claim 8,
wherein the first number is more than the second number.

10. The communication method according to claim 8,
wherein the first number is less than the second number.

11. The communication method according to any one of claims 8 to 10,
wherein the signal is transmitted to a plurality of second communication apparatuses using the first number or the second number of communication channels included in the frequency bandwidth,
a communication is performed using one or more other communication channels included in the frequency bandwidth without changing the number of communication channels used in a communication when the response has not been received from at least one of the plurality of second communication apparatuses using the first number or the second number of communication channels.

12. The communication method according to claim 11,
wherein the communication channels used in the communication with the plurality of second communication apparatuses is changed in a round-robin scheduling in the frequency bandwidth.

13. The communication method according to any one of claims 8 to 12,
wherein identification information of the second number of communication channels is transmitted to the plurality of second communication apparatuses.

14. The communication method according to any one of claims 8 to 13,
wherein the communication is performed through a power line.
